Europäisches Patentamt

**European Patent Office**

**Office européen des brevets**

(11) Veröffentlichungsnummer: **0 051 801**
**B1**

(12) **EUROPÄISCHE PATENTSCHRIFT**

(45) Veröffentlichungstag der Patentschrift:
**22.04.87**

(51) Int. Cl.⁴: **B 60 T 8/00**

(21) Anmeldenummer: **81109096.8**

(22) Anmeldetag: **28.10.81**

(54) **Antiblockiereinrichtung.**

(30) Priorität: **11.11.80 CH 8348/80**

(43) Veröffentlichungstag der Anmeldung:
**19.05.82 Patentblatt 82/20**

(45) Bekanntmachung des Hinweises auf die Patenterteilung:
**22.04.87 Patentblatt 87/17**

(84) Benannte Vertragsstaaten:
**DE FR GB IT SE**

(56) Entgegenhaltungen:
**DE - A - 2 119 590**
**DE - A - 2 259 929**
**GB - A - 1 259 629**
**GB - A - 1 581 943**
**US - A - 794 389**
**US - A - 2 840 278**
**US - A - 3 802 749**
**US - A - 4 005 910**

(73) Patentinhaber: **ALFRED TEVES GmbH,**
**Guerickestrasse 7 Postfach 90 01 20, D-6000 Frankfurt am Main (DE)**

(72) Erfinder: **Gygax, Johannes, Dipl. Masch. Ing.,**
**CH-8463 Benken (CH)**

ACTORUM AG

## Beschreibung

Die Erfindung betrifft eine Antiblockiereinrichtung nach dem Oberbegriff des Anspruchs 1.

Es ist bekannt, zur Antiblockierregelung eines Fahrzeuges nicht alle Räder einzeln zu regeln, sondern je nach Gutdünken des Konstrukteurs bestimmte Gruppen von Rädern mit einer einzigen Regeleinrichtung auszustatten, wobei dann die Regelung nach Auswahl eines der Sensorsignale der gemeinsam geregelten Räder stattfindet (US-A-3 802 749).

Diese Auswahl kann beispielsweise nach dem «Select Low»-Prinzip erfolgen, was bedeutet, dass jeweils das Signal des am stärksten verzögerten Rades zur Regelung herangezogen wird. Dies hat seine Begründung darin, dass die schwächer verzögerten Räder grössere Reibwerte zur Strasse aufweisen und bei Auswahl eines dieser Räder das am stärksten verzögerte Rad blockieren würde. In diesem Fall werden also mehrere Räder auf einen gleichen, für das mit der Strasse am schlechtesten verbundene Rad geltenden Bremsdruck reguliert, wobei das Nichtausnützen der grösseren Bremswirkung des anderen Rades bzw. der anderen Räder in Kauf genommen wird um das Blockieren des den geringsten Kontakt mit der Strasse aufweisenden Rades zu verhindern.

Die bisher bekannten Antiblockieranlagen haben jedoch den Nachteil, dass die Zuordnung von Rädern zu einer bestimmten Gruppe die dann als Ganzes nach dem «Select Low»-Prinzip geregelt wird, fixiert ist, was zur Abdeckung aller Möglichkeiten der verschiedenen Belastungen der Räder bei Bremsungen ungünstig ist. Es wird hierbei immer Situationen geben, für die die gewählte Aufteilung nicht optimal ist.

Die Erfindung hat zur Aufgabe unter Beibehaltung des Vorteils der Materialeinsparung bei Gruppenbildung von «Select Low» geregelten Rädern eine weitere Möglichkeit zur Optimierung der Druckverteilung auf die geregelten Räder zu schaffen.

Erfindungsgemäss geschieht das durch eine Antiblockiereinrichtung mit den im Anspruch 1 genannten Merkmalen.

Die Erfindung wird im Folgenden an Hand der Zeichnung näher erläutert.

Es zeigen:

Fig. 1 ein Antiblockiersystem mit einem einzigen Modulator für alle vier Räder, und

Fig. 2 ein System für eine diagonale Zweikreisbremsanlage.

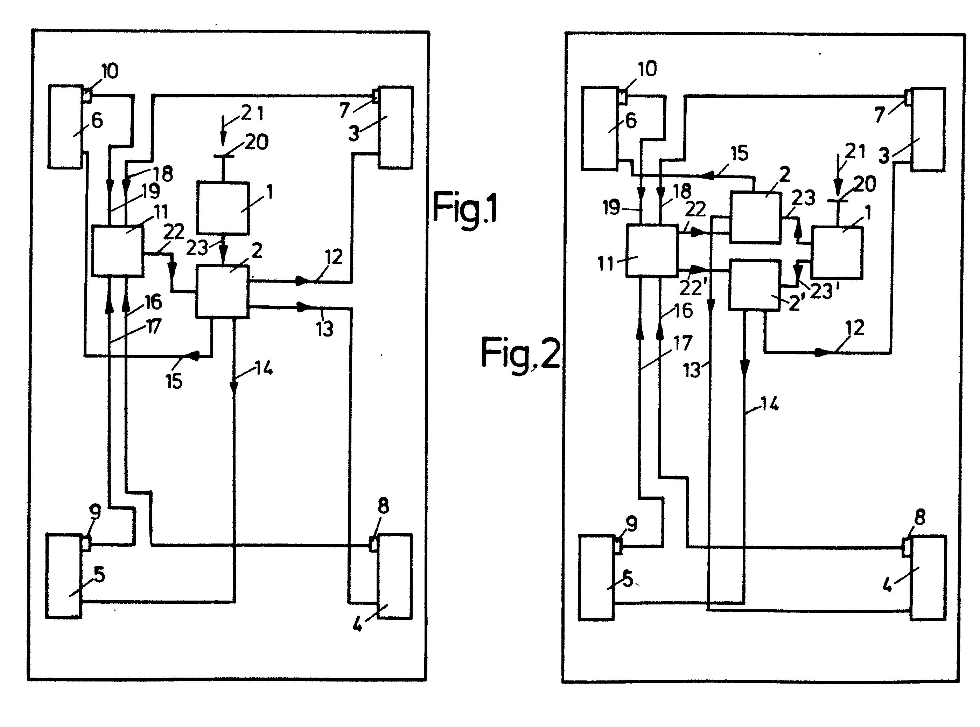

In den Fig. 1 und 2 sind schematisch zwei Fahrzeuge dargestellt, deren für die Erfindung wesentliche Teile im Folgenden beschrieben werden. In einem Hauptbremszylinder 1 wird mittels Betätigung des Bremspedals 20 in Richtung des Pfeils 21 die Bremsflüssigkeit unter Druck gesetzt, und über die Leitung 23 dem Antiblockiermodulator 2 zugeführt. Der Modulator hat vier Ausgänge oder einen Ausgang mit einem Vierfachverteiler und ist über die Leitungen 12, 13, 14 und 15 mit den Rädern 3, 4, 5 und 6 verbunden, welche durch nicht dargestellte Bremsen abgebremst werden. Jedes Rad besitzt einen Sensor 7 bis 10, mittels welchem die Verzögerungsrate des jeweiligen Rades gemessen werden kann. Von den Sensoren 7 bis 10 führen Signalleitungen 16 bis 19 zu einer Erkennungseinrichtung 11, in welcher eines der vier Sensorsignale ausgewählt und in ein Steuersignal umgewandelt über die Leitung 22 bzw. 22' einem Antiblockiermodulator 2 und/oder 2' zugeführt wird.

Die Funktions- und Wirkungsweise der Bremsanlage nach Fig. 1 ist die folgende:

Bei vergleichbarer Achsbelastung für Vorder- und Hinterachse eines stehenden Fahrzeuges verschiebt sich die Lastverteilung im Bremsfall wesentlich im Sinne der stärkerem Belastung der Vorderachse.

Die folgende Beschreibung geht von diesem Regelfall aus, ohne jedoch den gegenteiligen Fall von der Erfindung auszuschliessen. Hierzu müssten nur die entsprechenden Umkehrungen getroffen werden.

Ferner wird zuerst der Fall betrachtet, dass gleichzeitig mit der Bremsung ein Richtungswechsel beispielsweise nach links stattfindet.

Es ist bekannt, dass beim Kurvenfahren die Aussenräder stärker belastet werden als die Innenräder, dass also in unserem Fall beim Bremsen in einer Linkskurve das vordere Aussenrad 3 am stärksten, die benachbarten Räder 4 und 6 mittelmässig und das hintere Innenrad 5 am schwächsten belastet wird.

Das am schwächsten belastete Rad überträgt die geringste Bremskraft auf die Strasse und wird speziell bei zu starken Bremsungen – und nur für solche ist eine Antiblockiereinrichtung vorgesehen – in seiner Wirkung vernachlässigbar sein. Als Konsequenz davon kann davon ausgegangen werden, dass selbst ein Blockieren dieses einen am schwächsten belasteten Rades 5 keine negativen Auswirkungen auf das Bremsverhalten, auf die Fahrstabilität und auf die Lenkbarkeit des Fahrzeuges hat.

Durch die Erkennungseinrichtung 11 wird dieses Rad erkannt und von einer Beeinflussung der Regelung ausgeschaltet. Von den drei verbleibenden Rädern 3, 4 und 6 ist eines stark und die zwei anderen weniger stark belastet bzw. in gutem oder weniger gutem Reibkontakt mit der Strasse.

Diese drei Räder werden nun nach dem «Select Low»-Prinzip geregelt, dass heisst es wird das am stärksten verzögerte bzw. das am schwächsten belastete oder den schlechtesten Reibkontakt zur Strasse aufweisende Rad als Mass für die Druckverminderung in den Bremszylindern aller drei Räder genommen. Dieses ausgewählte Rad ist im betrachteten Fall einer Bremsung in einer Linkskurve entweder das Rad 4 oder das Rad 6, je nach dem ob die Achslastverteilung durch das Bremsen stärker oder schwächer verändert wird, als die Lastverschiebung von den Innen- zu den Aussenrädern beim Kurvenfahren. Die vier gemeinsam geregelten Räder weisen daher alle den gleichen Bremsdruck auf, der so bemessen ist, dass das am stärksten blockiergefährdete Rad blokkiert, und das nunmehr am zweitstärksten blockiergefährdete Rad gerade nicht blockiert.

Bei einer Rechtskurve gilt das Beschriebene mit entsprechender Vertauschung von links nach rechts.

Bei Geradeausfahrt oder bei sehr schwacher Kurve muss allerdings, vor allem bei Fahrzeugen mit relativ grosser Vorderachslast, eine Sicherheit eingebaut sein, welche die Regelung zusätzlich beeinflusst.

In diesem Fall nämlich wären beide Hinterräder im Fall einer sehr starken Bremsung sehr schwach belastet, das zufällig schwächere würde eliminiert, und das andere, das aber immer noch ungenügend ist um zur Antiblockierregelung herangezogen zu werden würde in diesem Fall eine zu schwache Bremsung der verbleibenden drei Räder bewirken. Für diesen Fall könnte beispielsweise die Bremsanlage an den Hinterrädern zu-sätzlich mit einem Bremsdruckbegrenzer ausge-rüstet werden, der je nach Fahrzeugtyp den Bremsdruck auf einen festeingestellten oder auf einer lastabhängig geregelten Höchstwert begrenzt.

Bei selten vorkommenden zu starken Bremsungen beim Rückwärtsfahren gilt das vorher Beschriebene unter Vertauschung von Vorder- und Hinterrädern ebenfalls.

Ferner ist dieses Prinzip nicht nur bei Kurvenfahrten sondern auch bei anderen auftretenden unterschiedlichen Reibbedingungen der Räder eines Fahrzeugs anwendbar.

In der Fig. 2 ist grossteils mit gleichen Bezugszeichen für gleiche Teile wie in Fig. 1 eine Bremsanlage mit diagonaler Aufteilung von zwei Bremskreisen dargestellt.

Mit den Hauptzylindern 1 sind über zwei Leitungen 23, 23' zwei Antiblockiermodulatoren 2 und 2' verbunden, von denen jeder zwei Ausgänge hat, wobei die beiden Ausgänge eines Modulators jeweils mit zwei diagonal gegenüberliegenden Rädern bzw. deren Bremszylindern verbunden sind.

Die Funktionsweise ist die folgende:

Betrachtet man wieder den Fall der Bremsung in einer Linkskurve, so wird das Rad 3 am stärksten und das Rad 5 am schwächsten belastet. Mittels der Erkennungseinrichtung 11 wird der Bremskreis ausgewählt, in dem sich das am schwächsten belastete Rad 5 befindet, also der Bremskreis des Modulators 2, und dieser wird auf «Select High» geschalten, das heisst das rechte Vorderrad 3 wird optimal gebremst und das linke Hinterrad 5 wird entsprechend stark mitgebremst und kann zum Blockieren führen, was aber, da es sich um das am wenigsten belastete Rad handelt, unerheblich ist. Der andere Bremskreis mit dem Modulator 2' und den Rädern 4 und 6 wird auf «Select Low» geschaltet und regelt dadurch derart, dass das stärker zum Blockieren neigende Rad gerade nicht blockiert.

Bei diesem System ist eine weitere Sicherung für die Geradeausfahrt nicht notwendig, da beide Vorderräder ausreichend stark gebremst werden und kein wesentlicher Anteil der Bremsfähigkeit der Gesamtanlage vergeben wird.

Hingegen kann es sich bei diesem System je nach Auslegung der Lenkgeometrie des Fahrzeugs als notwendig erweisen, eine Begren-zungseinrichtung einzubauen, welche die Diffe-renz der Bremsdrücke in den beiden Bremskreisen unter einem vorbestimmbaren, vom Fahrzeugtyp abhängigen Schwellwert hält. Damit wird erreicht, dass die Bremskraftdifferenz der beiden Vorderräder für das betreffende Fahrzeug nie so gross wird, dass die Fahrstabilität nicht mehr gewährleistet ist.

In beiden betrachteten Anlagetypen steht also nicht von Anfang an fest, für welche Räder ein «Select Low»-Prinzip angewendet wird, sondern es wird durch Erkennen des für eine gute Bremsung unwichtigsten Rades und dessen erlaubter Blockierung unter den restlichen Rädern je nach Lage des nicht weiter beachteten Rades die Gruppe von «Select Low» geregelten Rädern erst festgelegt.

**Patentansprüche**

1. Antiblockiervorrichtung mit einem den Bremsdruck in Abhängigkeit der Radverzögerung regelnden Modulator (2, 2'), sowie mit Radsensoren (7–10), wobei weniger Modulatoren als Räder (3–6) und Sensoren (7–10) vorhanden sind und zumindest eine Gruppe von Rädern nach dem «Select Low»-Prinzip geregelt wird, dadurch gekennzeichnet, dass eine Erkennungseinrichtung (11) für das am stärksten verzögerte Rad und eine Umschalteinrichtung vorhanden ist, mittels der in Abhängigkeit von der Lage des am stärksten verzögerten Rades eine Auswahl der dem «Select Low»-Prinzip unterworfenen Rädern getroffen wird.

2. Antiblockiervorrichtung nach Anspruch 1, dadurch gekennzeichnet, dass für ein vierrädriges Fahrzeug ein einziger Modulator (2) vorhanden ist, und dass nach Erkennen des am stärksten verzögerten Rades alle übrigen nach dem «Select Low»-Prinzip geregelt werden (Fig. 1).

3. Antiblockiervorrichtung nach Anspruch 1 für ein vierrädriges Fahrzeug mit diagonaler Bremskreisaufteilung, dadurch gekennzeichnet, dass für jeden Bremskreis ein Modulator (2, 2') vorhanden ist und dass in dem Bremskreis, in dem das am stärksten verzögerte Rad liegt auf «Select High» und im anderen auf «Select Low» geschalten wird (Fig. 2).

4. Antiblockiervorrichtung nach Anspruch 3, da-durch gekennzeichnet, dass eine Begrenzungs-einrichtung vorhanden ist, durch welche die Differenz der Bremsdrücke in den beiden Bremskreisen unter einem vorbestimmbaren vom Fahrzeugtyp abhängigen Schwellwert haltbar ist.

5. Antiblockiervorrichtung nach einem der Ansprüche 1 bis 4, dadurch gekennzeichnet, dass mittels eines auf die Räder der Hinterachse wirkenden festeingestellten oder lastabhängigen Bremsdruckreglers zusätzlich zur Antiblockierregelung ein Blockieren eines Hinterrades verhinderbar ist.

## Claims

1. An anti-lock device having a modulator (2, 2') regulating the braking pressure in dependence on wheel deceleration and having wheel sensors (7 to 10), wherein there are fewer modulators than wheels (3 to 6) and sensors (7 to 10), and wherein at least one group of wheels is regulated according to the «select-low» principle, characterized in that there is provision of a device (11) for identifying the wheel which has been decelerated most strongly, as well as a change-over device serving to select the wheels subject to the «select-low» principle as a function of the position of the wheel decelerated most strongly.

2. An anti-lock device as claimed in claim 1, characterized in that one single modulator (2) is provided for a four-wheel vehicle, and in that after identification of the wheel decelerated most strongly, all other wheels are regulated according to the «select-low» principle (Fig. 1).

3. An anti-lock device as claimed in claim 1 for a four-wheel vehicle with diagonal brake circuit allotment, characterized in that there is provision of one modulator (2, 2') for each brake circuit, and in that «select high» is employed in the brake circuit comprising the wheel which is decelerated most strongly, while «select low» is employed in the other one (Fig. 2).

4. An anti-lock device as claimed in claim 3, characterized in that there is provision of a limiting device, by which the difference of the braking pressures in the two brake circuits can be kept below a predeterminable threshold value which is dependent on the type of vehicle.

5. An anti-lock device as claimed in any one of the claims 1 to 4, characterized in that, in addition to anti-lock control, locking of a rear wheel can be prevented by means of an invariably set or load-responsive braking pressure regulator which acts on the wheels of the rear axle.

## Revendications

1. Dispositif d'anti-blocage comprenant un modulateur (2, 2') de régulation de la pression de freinage en fonction du ralentissement des roues, dans lequel sont prévus moins de modulateurs que de roues (3–6) et de capteurs de roues (7, 10) et dans lequel un groupe de roues au moins est régulé selon le principe de la «sélection basse», caractérisé en ce qu'il est prévu un agencement d'identification (11) de la roue qui est la plus fortement ralentie et un agencement de commutation, par lesquels, selon l'état de la roue la plus fortement ralentie, intervient un choix des roues soumises au principe de la «sélection basse».

2. Dispositif d'anti-blocage selon la revendication 1, caractérisé en ce que, pour un véhicule à quatre roues, un seul modulateur (2) est prévu et en ce que, après l'identification de la roue la plus fortement ralentie, toutes les autres sont soumises au principe de la «sélection basse».

3. Dispositif d'anti-blocage selon la revendication 1 pour un véhicule à quatre roues avec division en deux circuits de freinage en diagonales, caractérisé en ce qu'un modulateur (2, 2') est prévu pour chaque circuit de freinage et en ce que, dans le circuit de freinage dans lequel se trouve la roue la plus fortement ralentie, est appliquée la «sélection haute», la «sélection basse» étant appliquée dans l'autre circuit.

4. Dispositif d'anti-blocage selon la revendication 3, caractérisé en ce qu'il est prévu un agencement à seuil par lequel peut être limitée la différence entre les pressions de freinage dans les deux circuits de freinage et une valeur de seuil prédéterminée selon le type de véhicule.

5. Dispositif d'anti-blocage selon l'une quelconque des revendications 1 à 4, caractérisé en ce que, en plus de l'anti-blocage, un blocage de roue arrière peut être empêché par un régulateur de pression de freinage agissant sur les roues de l'essieu arrière, fixe ou amovible.

Fig.1

Fig.2